# EUROPÄISCHE PATENTSCHRIFT

(11) **EP 3 230 591 B1**
(45) Veröffentlichungstag und Bekanntmachung des Hinweises auf die Patenterteilung: **20.02.2019**
(21) Anmeldenummer: 15807904.6
(22) Anmeldetag: 09.12.2015
(51) Int. Cl.: F04B 53/16, B21D 39/06, B23P 11/02, F04B 39/06, F28D 7/10

(54) **GEHÄUSE MIT HIERGEGEN GEDICHTETEM ZYLINDRISCHEM EINSATZ**
HOUSING HAVING A CYLINDRICAL INSERT SEALED AGAINST THE HOUSING
BOÎTIER MUNI D'UN ÉLÉMENT RAPPORTÉ CYLINDRIQUE RENDU ÉTANCHE PAR RAPPORT AUDIT BOÎTIER

(30) Priorität: 10.12.2014 DE 102014118269
(43) Veröffentlichungstag der Anmeldung: 18.10.2017
(73) Patentinhaber: KNORR-BREMSE Systeme für Nutzfahrzeuge GmbH, 80809 München (DE)
(72) Erfinder: HEBRARD, Gilles, 14000 Caen (FR)
(86) Internationale Anmeldenummer: PCT/EP2015/079166
(87) Internationale Veröffentlichungsnummer: WO 2016/091976

(56) Entgegenhaltungen:
- EP-A1- 2 258 972
- EP-A1- 2 636 901
- WO-A1-96/28661
- CH-A- 84 799
- DE-A1- 4 301 126
- US-A1- 2013 180 109

## Beschreibung

Die Erfindung betrifft eine abgedichtete Anordnung aus einem Gehäuse und einem zylindrischen Einsatz.

### Stand der Technik

Kurbelgehäuse für Motoren und Kompressoren bestehen häufig aus leichten, weichen Materialien, wie z.B. Aluminium. Diese Materialien sind für die Zylinderlaufflächen, an denen die Kolben entlang gleiten, nicht geeignet. Daher werden in entsprechende Zylinderbohrungen im Kurbelgehäuse Zylinderbuchsen aus härteren Materialien eingesetzt, an denen die Kolben im Betrieb des Motors oder Kompressors entlang gleiten. Hierbei ist es notwendig, die Zylinderbuchsen gegen das Kurbelgehäuse abzudichten. Dies gilt insbesondere dann, wenn die Zylinderbuchse mit dem Kurbelgehäuse einen Kühlkanal einschließt.

Zylinderbuchsen werden in der Regel entweder in einer losen Passung oder in einer Presspassung in das Kurbelgehäuse eingesetzt. Bei einer losen Passung kann sich die Zylinderbuchse im späteren Betrieb innerhalb des Kurbelgehäuses bewegen, was die Dichtigkeit beeinträchtigt. Bei einer Presspassung kann die zwischen Zylinderbuchse und Kurbelgehäuse angebrachte Dichtung (O-Ring) mechanisch beschädigt werden, was nach der Montage der Zylinderbuchse in das Kurbelgehäuse nicht mehr überprüft werden kann.

Oberbegriffliche Beispiele hierfür sind, aus der WO 96/28661 A1, und der CH 84799 A bekannt, aus denen sich die oben genannte Problematik ergibt.

### Aufgabe und Lösung

Es ist daher die Aufgabe der Erfindung, eine Anordnung aus einem Gehäuse und einem zylindrischen Einsatz mit einer verbesserten Abdichtung zur Verfügung zu stellen.

Diese Aufgabe wird erfindungsgemäß gelöst durch eine Anordnung gemäß Hauptanspruch. Weitere vorteilhafte Ausgestaltungen ergeben sich aus den darauf rückbezogenen Unteransprüchen.

### Gegenstand der Erfindung

Im Rahmen der Erfindung wurde eine Anordnung aus einem Gehäuse mit einer Aufnahme oder Öffnung und einem zylindrischen Einsatz, der mit mindestens einer Übermaßpassung in die Aufnahme oder Öffnung montiert ist, entwickelt. Unter zylindrisch werden nicht nur Kreiszylinder verstanden. Der Zylinder kann auch eine elliptische oder polygonale Grundfläche aufweisen.

Erfindungsgemäß weist der Einsatz eine umlaufende Nut auf, so dass er durch Material des Einsatzes und/oder Gehäuses, das bei der Montage in die Nut gedrängt worden ist, gegen das Gehäuse sowohl befestigt als auch flüssigkeits- und/oder gasdicht abgedichtet ist, und dass eine Außenwandung des Einsatzes und eine Innenwandung des Gehäuses einen Raum flüssigkeits- und/oder gasdicht umschließen.

Der Querschnitt der Nut kann jede beliebige Form aufweisen. Am einfachsten zu fertigen sind Nuten mit einem abgerundeten Querschnitt, beispielsweise mit einem Krümmungsradius zwischen 0,5 und 1,5 mm. V-Nuten oder andere Nuten mit polygonalen Querschnitt, wie beispielsweise rechteckige Nuten, sind jedoch auch zulässig.

Es wurde erkannt, dass bei einer Übermaßpassung grundsätzlich Material des Einsatzes und/oder des Gehäuses verdrängt wird. Die erfindungsgemäß vorgesehene Nut stellt einen definierten Ort bereit, an den dieses Material bevorzugt fließen kann. Nach Abschluss der Montage ist der Einsatz durch das in der Nut befindliche Material zum Einen gegen das Gehäuse arretiert. Zum Anderen fungiert dieses Material gleichzeitig als Dichtung zwischen dem Einsatz und dem Gehäuse. Eine separate Dichtung im Bereich der Presspassung wird entbehrlich.

Die Montage des Einsatzes in das Gehäuse kann durch kraftvolles Hereindrücken des Einsatzes in die Aufnahme oder Öffnung, durch Erwärmung des Gehäuses und anschließendes Einbringen des Einsatzes oder durch eine Kombination aus beiden Maßnahmen bewirkt werden.

Vorteilhaft ist der Einsatz ein Hohlzylinder mit offener Grund- und/oder Deckfläche. Dann ist er beispielsweise als Lauffläche für einen Kolben geeignet, der in einem Motor von einem Medium im Einsatz (Zylinderbuchse) angetrieben wird oder umgekehrt in einem Kompressor, der das in der Zylinderbuchse befindliche Medium verdichtet. Ein Hohlzylinder weist grundsätzlich eine Außenwandung auf.

Vorteilhaft weist die Nut eine Tiefe im Bereich zwischen 5% und 15% der Stärke dieser Außenwandung auf. Dies ist ein optimaler Kompromiss zwischen
- der Stabilität der Befestigung zwischen dem Einsatz und dem Gehäuse, die mit zunehmender Tiefe der Nut zunimmt;
- der Qualität der Dichtung zwischen Einsatz und Gehäuse, die Oberhalb einer bestimmten Tiefe tendenziell abnimmt; und
- der Stabilität der Außenwandung als solcher, die mit zunehmender Tiefe der Nut ebenfalls tendenziell abnimmt.

Vorteilhaft umschließen eine Außenwandung des Einsatzes und eine Innenwandung des Gehäuses einen Raum flüssigkeits- und/oder gasdicht. Ein solcher Raum kann beispielsweise von einem Kühlmedium durchströmbar sein. Er ist wesentlich einfacher zu fertigen als ein allseits vom Gehäuse selbst umschlossener Kühlraum: Wird das Gehäuse gegossen, muss ein vollständig vom Gehäuse umschlossener Kühlraum beim Gießen durch Sand oder ähnliche Mittel freigehalten werden. Es ist schwierig, diesen Sand nach dem Gießen vollständig zu entfernen, damit er nicht in den Kühlkreislauf gelangt und beispielsweise eine Pumpe beschädigt. Weiterhin sind die Verbindungen eines solchen Kühlraums durch die Wand des Gehäuses hindurch nach außen und ihre Verschlüsse anfällig für Leckagen. Wird hingegen eine Wand des Kühlraums durch den Einsatz gebildet, ist als einziger zusätzlicher Fertigungsschritt am Gehäuse das Ausbohren eines entsprechenden Freiraums notwendig.

Dieses Prinzip kann nicht nur bei Motoren und Kompressoren angewendet werden. Auch ein Wärmetauscher kann hiervon profitieren. Bei einem erfindungsgemäßen Wärmetauscher sind sowohl der Raum zwischen Einsatz und Gehäuse als auch der Einsatz jeweils von einem flüssigen oder gasförmigen Medium durchströmbar, so dass Wärme durch die Wandung des Einsatzes hindurch zwischen den beiden Medien ausgetauscht werden kann. Beispielsweise kann der Einsatz von einem heißen Gas durchströmbar sein, und der Raum zwischen Einsatz und Gehäuse kann von einem Kühlmedium durchströmbar sein. Die erfindungsgemäß verbesserte Abdichtung ist wesentlich stabiler gegenüber wechselnden Temperaturen als Abdichtungen mit O-Ringen nach dem Stand der Technik.

Vorteilhaft ist der Einsatz aus einem härteren Material gefertigt als das Gehäuse. Dann wird beim Einführen des Einsatzes in das Gehäuse bevorzugt das Material des Gehäuses verdrängt. Es dringt in die Nut am Einsatz ein und hintergreift diese Nut. Dann sind sowohl die mechanische Arretierung des Einsatzes gegen das Gehäuse als auch die Abdichtung besonders gut.

Beispielsweise kann das Gehäuse aus Aluminium bestehen, und der Einsatz kann aus Gusseisen, Stahl, einer Kupferlegierung oder hypereutektoidem Aluminium bestehen. Dann kann beispielsweise ein Kurbelgehäuse aus leichtem Aluminium gefertigt werden, ohne das auf die Vorteile der genannten harten Materialien an der Zylinderlauffläche verzichtet werden muss.

Vorteilhaft weist die Nut eine Breite auf, die im Bereich des Drei- bis Fünffachen ihrer Tiefe liegt. Dies ist ein optimaler Kompromiss zwischen der Stabilität der mechanischen Arretierung zwischen Einsatz und Gehäuse, die mit zunehmender Breite der Nut tendenziell besser wird, und der Qualität der Dichtung, die oberhalb einer optimalen Breite tendenziell schlechter wird.

Aus den gleichen Überlegungen weist die Nut bevorzugt eine Tiefe zwischen 0,4 mm und 1 mm, bevorzugt zwischen 0,4 mm und 0,8 mm, auf.

In einer besonders vorteilhaften Ausgestaltung der Erfindung ist das Gehäuse als Kurbelgehäuse eines Motors oder Kompressors ausgebildet, und der Einsatz ist als Zylinderbuchse ausgebildet. Diese Ausgestaltung löst die eingangs beschriebenen Probleme bei der Presspassung zwischen Zylinderbuchsen und Kurbelgehäusen. Nach dem Stand der Technik bestand grundsätzlich das Problem, dass sich bei einer Presspassung die Zylinderbuchse irgendwie einen Weg in das Gehäusematerial bahnt, wobei durch die gegenseitige Verformung Undichtigkeiten entstehen. Durch die erfindungsgemäß vorgesehene Nut ist ein definierter Ort vorgesehen, an den das verdrängte Material wandert. Indem dieser Freiraum am Einsatz angeordnet ist, wird auch bevorzugt das Material des Gehäuses verdrängt. Die bessere mechanische Arretierung führt dazu, dass sich die Zylinderbuchse in Betrieb nicht mehr innerhalb des Kurbelgehäuses bewegt. So kommt es im späteren Betrieb auch nicht mehr zur bislang bekannten Dejustage der Zylindermittelachse gegen die Achse der Kurbelwelle. Beide Achsen bleiben exakt in einer Ebene. Der Freiraum in Form der Nut führt dazu, dass die Verdrängung von Material des Gehäuses nicht mehr wie bisher in einer Deformierung der Zylinderbohrung resultiert. Durch die verbesserte mechanische Arretierung zwischen Zylinderbuchse und Gehäuse ist weiterhin gewährleistet, dass das Gehäuse nach Montage der Zylinderbuchse noch im vollen Umfang mechanisch bearbeitet werden kann, ohne die Justage der Zylinderbuchse gegen die Zylinderbohrung im Gehäuse zu zerstören. Es ist also nicht mehr notwendig, alle mechanischen Bearbeitungsschritte am Gehäuse abgeschlossen zu haben, bevor zum Schluss die Zylinderbuchse montiert wird. Insbesondere können bei der mechanischen Bearbeitung Stufen zwischen dem oberen Ende der Zylinderbuchse und der oberen Deckfläche des Gehäuses eliminiert werden. Die mechanische Bearbeitung des Kurbelgehäuses ist beispielsweise erforderlich, um Lager für die Kurbelwelle, Flansche oder die obere Deckfläche des Gehäuses auszugestalten. Weiterhin kann vorteilhaft auch die Zylinderbuchse selbst nach erfolgter Montage im Kurbelgehäuse weiter bearbeitet werden, um ihr Zusammenspiel mit dem Kolben im späteren Betrieb zu optimieren. Sofern zwischen Gehäuse und Zylinderbuchse kein Kühlraum vorgesehen ist, ist die erfindungsgemäß verbesserte Dichtung immer noch von Vorteil: Sie sichert dann die Verbindung zwischen Zylinderbuchse und Gehäuse gegen unerwünschten Ölaustritt ab.

Nicht alle Kontaktstellen zwischen dem Einsatz (Zylinderbuchse) müssen als Übermaßpassungen (Presspassungen) ausgestaltet sein. Die erfindungsgemäß vorgesehene Presspassung kann auch mit anderen Passungsarten kombiniert werden.

Die Dichtung durch das in die Nut eindringende Material kann durch Einbringen einer Flüssigkeitsdichtung weiter verbessert werden.

### Spezieller Beschreibungsteil

Nachfolgend wird der Gegenstand der Erfindung anhand von Figuren erläutert, ohne dass der Gegenstand der Erfindung hierdurch beschränkt wird. Es ist gezeigt:
- Figur 1:: gusseisernes Kurbelgehäuse für einen Kompressor mit Kühlkanälen nach dem Stand der Technik.
- Figur 2:: Zylinderbuchse als Einsatz gemäß einem Ausführungsbeispiel der Erfindung.
- Figur 3:: Kurbelgehäuse eines Kompressors mit einer Zylinderbuchse als Einsatz als Anordnung gemäß einem Ausführungsbeispiel der Erfindung.
- Figur 4:: Wärmetauscher mit gekühltem Gehäuse und heißgasdurchströmtem Einsatz als Anordnung gemäß einem weiteren Ausführungsbeispiel der Erfindung.

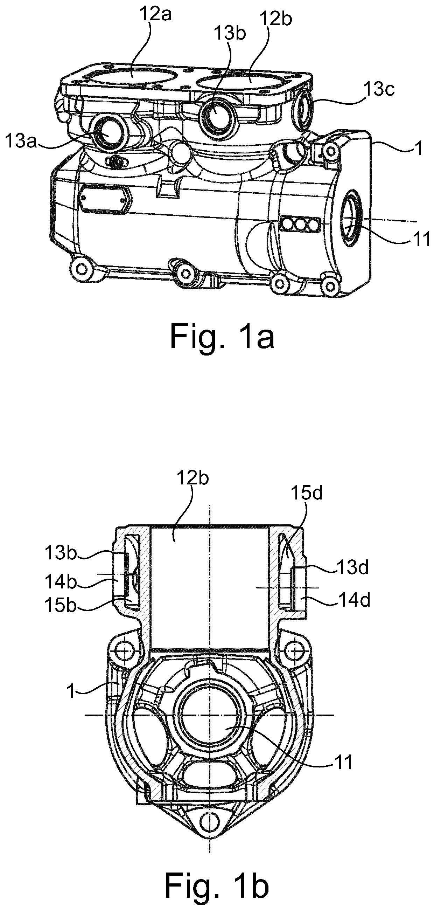

Figur 1a zeigt die Außenansicht eines Kompressorgehäuses nach dem Stand der Technik mit integrierten Kühlkanälen. Dieses Kurbelgehäuse 1 ist aus Gusseisen gefertigt. Es hat einen Kurbelraum 11 sowie zwei Zylinderbohrungen 12a und 12b. Im Bereich der Zylinderbohrungen 12a und 12b führen Öffnungen 13a, 13b und 13c in der Außenwand des Gehäuses zu den in das Gehäuse integrierten Kühlkanälen.

Figur 1b ist eine Schnittzeichnung des in Figur 1a gezeigten Kurbelgehäuses senkrecht zur Achse des Kurbelraums 11. Die Schnittebene teilt die Zylinderbohrung 12b mittig. Die Öffnungen 13b und 13d in der Wand des Kurbelgehäuses, die zu den Kühlkanälen 15b und 15d führen, sind in dieser Ansicht mit Stopfen 14b und 14d verschlossen. Die für den Betrieb notwendige Zylinderbuchse ist in dieser Ansicht noch nicht eingefügt.

Um die Kühlkanäle 15b und 15d gießen zu können, ist eine entsprechende Gussform aus Sand notwendig. Nach der Fertigung ist genau darauf zu achten, dass der Sand vollständig aus den Kühlkanälen 15b und 15d entfernt wird, da er ansonsten in den Motor eindringen und möglicherweise die Wasserpumpe beschädigen kann. Weiterhin ist der Verschluss der Öffnungen 13b und 13d durch die Stopfen 14b und 14d ein Schwachpunkt im Hinblick auf die Abdichtung, die vielfach eine zusätzliche Flüssigkeitsdichtung erforderlich macht. Weiterhin ist es nicht möglich, dass Material des Kurbelgehäuses 1 auf hochdruckgegossenes Aluminium zu ändern, weil es dabei nicht möglich ist, die Kühlkanäle 15b und 15d zu fertigen. Alternative Designs können die meisten dieser Probleme lösen, allerdings nur im Austausch gegen andere Probleme: So tritt vielfach eine Stufe zwischen dem oberen Ende der Zylinderbuchse und der oberen Deckfläche des Gehäuses 1 auf, die die Abdichtung der Zylinderköpfe gegen diese Deckfläche beeinträchtigt.

Eine Zylinderbuchse kann auf zwei verschiedene Arten in den Zylinderraum 12b eingesetzt werden: Entweder mit einer losen Passung oder mit einer Presspassung. Die lose Passung hat den Nachteil, dass sich die Zylinderbuchse im späteren Betrieb durch thermische Ausdehnung oder durch mechanische Beanspruchung innerhalb der Zylinderbohrung 12b bewegen kann. Bei der Presspassung kann der O-Ring, der die Zylinderbuchse gegen die Zylinderbohrung 12b abdichtet, durch die mechanische Krafteinwirkung beim Zusammenbau beschädigt werden, was nach dem Zusammenbau nicht mehr überprüft werden kann.

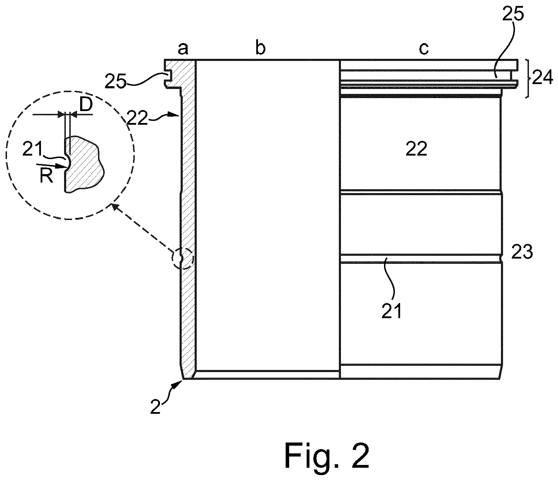

Figur 2 zeigt eine Zylinderbuchse, die als Einsatz in einem Ausführungsbeispiel der Erfindung vorgesehen ist. Im Bereich a ist ein Querschnitt durch die Wand der Zylinderbuchse dargestellt. Bereich b zeigt eine Profilzeichnung der Außenwand. Bereich c zeigt eine Profilzeichnung der Innenwand.

Die Innenwand der Zylinderbuchse 2 weist eine Nut 21 auf, die vergrößert dargestellt ist. Sie hat einen abgerundeten Querschnitt mit einem Radius R von 1 mm und einer Tiefe D von 0,5 mm. Beim späteren einsetzen der Zylinderbuchse in die Zylinderbohrung mittels einer Presspassung wird Material aus der Wandung der Zylinderbohrung in diese Nut 21 verdrängt und hintergreift sie. Dadurch wird die Zylinderbuchse 2 zum einen im Kurbelgehäuse 1 mechanisch arretiert. Zum anderen wird sie gegen die Innenwand der Zylinderbohrung 12a, 12b abgedichtet. Der Bereich, in dem die Zylinderbuchse mit einer Presspassung an der Zylinderbohrung anliegen wird, ist mit dem Zeichen 23 bezeichnet.

Das Figur 2 gezeigte Ausführungsbeispiel nutzt die verbesserte Abdichtung zwischen der Zylinderbuchse und der Innenwand der Zylinderbohrung, um die Kühlung der Zylinderbuchse zu vereinfachen und zu verbessern. Hierzu weist die Innenwand der Zylinderbuchse eine Aussparung 22 auf, die in Verbindung mit einer korrespondierenden Aussparung an der Innenwand der Zylinderbohrung 12a, 12b einen Kühlkanal ausbilden wird. Unterhalb dieses Kühlkanals ist die Zylinderbuchse durch die Presspassung mit der Nut 21 gegen die Innenwand der Zylinderbohrung abgedichtet. Oberhalb des Kühlkanals liegt die Zylinderbuchse mit dem Bereich 24 an der Innenwand der Zylinderbohrung an. In diesem Bereich ist eine weitere Nut 25 vorgesehen, in die ein herkömmlicher O-Ring zur Abdichtung gegen die Innenwand der Zylinderbohrung 12a, 12b eingesetzt wird. Da die Zylinderbuchse bereits in Bereich 23 durch die Presspassung mechanisch gegen die Zylinderbohrung 12a. 12b arretiert ist, ist in Bereich 24 keine weitere Presspassung mehr notwendig. Die in Bereich 24 wirkenden Kräfte sind daher nicht so groß, dass ein in die Nut 25 eingesetzter O-Ring beim Einsetzen der Zylinderbuchse in das Kurbelgehäuse mechanisch beschädigt wird.

Das Kurbelgehäuse wird vorteilhaft nach dem Gießen zunächst nur mit den Zylinderbohrungen 12a und 12b versehen und erst nach dem Einsetzen der Zylinderbuchse 2 weiter bearbeitet. Das Einsetzen der Zylinderbuchse 2 kann durch mechanische Kraftanwendung, durch Erhitzen des Kurbelgehäuses oder durch eine Kombination aus beiden Maßnahmen durchgeführt werden.

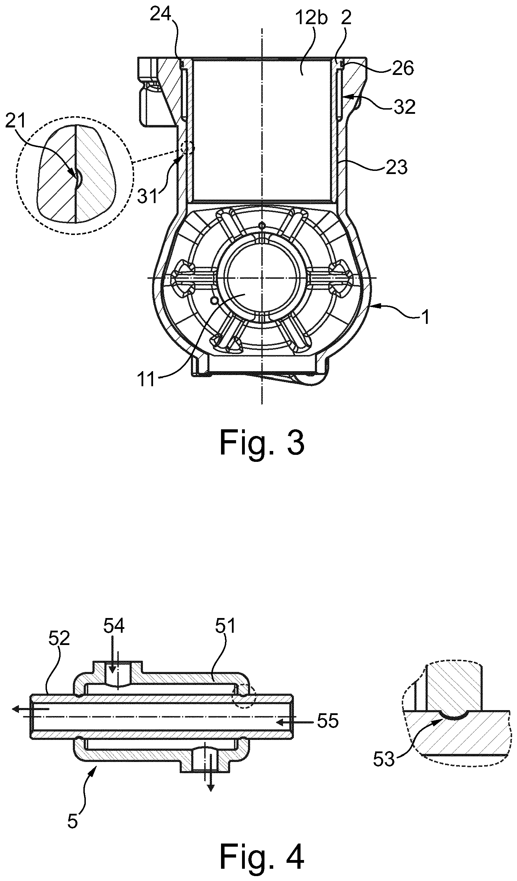

Figur 3 zeigt ein Ausführungsbeispiel eines Kurbelgehäuses für einen Kompressor im Sinne der Erfindung. Figur 3 ist eine Schnittzeichnung durch die gleiche Ebene wie in Figur 1b. Das Kurbelgehäuse 1 besteht aus hochdruckgegossenem Aluminium. In seine Zylinderbohrung 12b ist eine Zylinderbuchse 2 gemäß Figur 2 eingesetzt. Deren Aussparung 22, die in Figur 2 dargestellt ist, korrespondiert mit einer Aussparung 32 in der Innenwand der Zylinderbohrung 12, um einen Kühlkanal für eine Flüssigkeitskühlung der Zylinderbuchse 2 zu bilden. Die Aussparung 32 kann beispielsweise hergestellt werden, indem die Zylinderbohrung 12b in ihrem oberen Bereich durch eine weitere Bohrung mit etwas größerem Durchmesser aufgeweitet wird. Der Kühlkanal 32 ist nach unten durch den Bereich 23 abgedichtet, in dem die Zylinderbuchse durch eine Presspassung an der Innenwand der Zylinderbohrung 12b anliegt. Zentrales Dichtungselement ist hier die im Bereich 31 angeordnete Nut 21 in der Außenwand der Zylinderbuchse. Wie in einer Ausschnittsvergrößerung dargestellt ist, ist das Wandmaterial der Zylinderbohrung 12b durch die mechanische Kraftanwendung in die Nut 21 verdrängt worden und hintergreift diese. Dadurch ist die Zylinderbuchse 2 innerhalb der Zylinderbohrung 12b mechanisch arretiert und zugleich abgedichtet. Oberhalb des Kühlkanals 32 ist die Zylinderbuchse 2 mit ihrem Bereich 24 lose in die Innenwand der Zylinderbohrung 12b eingepasst. Hier erfolgt die Abdichtung durch einen konventionellen O-Ring 26, der in der weiteren Nut 25 im Bereich 24 in der Außenwand der Zylinderbuchse angebracht ist.

Gegenüber dem Stand der Technik bietet dieses Kurbelgehäuse mehrere Vorteile: Zunächst einmal ist es deutlich leichter als das gusseiserne Kurbelgehäuse, weil es aus Aluminium gefertigt ist. Der Fortfall der Notwendigkeit, vollständig durch das Material des Kurbelgehäuses umschlossene Kühlkanäle 15b und 15d fertigen zu müssen, hat den Wechsel vom Gusseisen auf das leichtere Aluminium ermöglicht. Die Funktion der Kühlkanäle 15b und 15d wird durch den Kühlkanal 32 ersetzt, der mit der entsprechenden Aussparung 22 an der Außenwand der Zylinderbuchse korrespondiert. Eine zusätzliche Gewichtsersparnis ergibt sich dadurch, dass für die Bildung des Kühlkanals überhaupt kein zusätzliches Material verwendet werden muss; es wird im Gegenteil nur von Bauteilen, die ohnehin schon vorhanden sind, jeweils Material weggenommen. Das Kurbelgehäuse 1 mit der fest arretierten Zylinderbuchse 2 kann für die weitere mechanische Bearbeitung so behandelt werden, als wären Kurbelgehäuse 1 und Zylinderbuchse 2 aus einem Guss. Es können Lager für die Kurbelwelle, Flansche sowie Zylinderköpfe angebracht werden, ohne dass sich die Zylinderbuchse 2 noch einmal innerhalb der Zylinderbohrung 12b verschiebt. Auch die Zylinderbuchse 2 selbst kann noch, beispielsweise durch Bohren oder Honen, mechanisch bearbeitet werden, ohne dass sie sich in der Zylinderbohrung 12b verschiebt. Bei jedweder mechanischen Bearbeitung bleibt auch die Dichtung im Bereich 31 durch die Nut 21 und das in sie eingedrungene Material in vollem Umfang erhalten.

Die Vorteile der verbesserten Abdichtung zwischen Zylinderbuchse 2 und Zylinderbohrung 12b sind auch dann nutzbar, wenn das Kurbelgehäuse 1 nicht wassergekühlt ist. Die Dichtung 31 schützt dann gegen den Austritt von Öl aus dem Kurbelraum 11.

Figur 4 zeigt einen Wärmetauscher als weiteres Ausführungsbeispiel für eine erfindungsgemäße Anordnung. Er umfasst ein Aluminiumgehäuse 51, das von einem flüssigen Kühlmedium 54 durchströmbar ist, und ein in dieses Gehäuse 51 eingesetztes zylindrisches Rohr 52 aus einem härteren Material, dass von einem heißeren Medium, insbesondere von einem heißen Gas, durchströmbar ist. Das harte Material für das Rohr 52 kann beispielsweise Gusseisen, Stahl oder eine Kupferlegierung sein. Die Außenwand des Rohrs 52 weist an den Kontaktstellen zum Gehäuse 51 jeweils eine umlaufende Nut 53 auf. Das Rohr 52 ist jeweils mit einer Presspassung in das Gehäuse 51 eingesetzt. Wie in der Ausschnittsvergrößerung verdeutlicht, ist das weichere Material des Gehäuses 51 beim mechanischen Zusammenfügen in die Nut 53 am Rohr 52 eingedrungen und hintergreift diese. Diesen Effekt kann man auch griffig "spring back effect" nennen. Die Verbesserung der Presspassung durch die erfindungsgemäß vorgesehene Nut verbessert sowohl die mechanische Arretierung des Rohrs 52 gegen das Gehäuse 51 als auch insbesondere die Abdichtung des heißen Mediums 55 gegen die Kühlflüssigkeit 54. Diese Dichtung wird an einen Wärmetauscher wegen der hohen Temperaturunterschiede und ständigen Temperaturwechsel besonders stark beansprucht.

## Patentansprüche

1. Anordnung aus einem Gehäuse (1, 51) mit einer Aufnahme oder Öffnung (12a, 12b) und einem zylindrischen Einsatz (2, 52), der mit mindestens einer Übermaßpassung in die Aufnahme oder Öffnung (12a, 12b) montiert ist, wobei der Einsatz (2, 52) eine umlaufende Nut (21, 53) aufweist, so dass er durch Material des Einsatzes (2, 52) und/oder des Gehäuses (1, 51), das bei der Montage in die Nut (21, 53) gedrängt worden ist, gegen das Gehäuse (1, 51) sowohl befestigt als auch flüssigkeits- und/oder gasdicht abgedichtet ist, **dadurch gekennzeichnet, dass** eine Außenwandung des Einsatzes (2, 52) und eine Innenwandung des Gehäuses (1,51) einen Raum (32) flüssigkeits- und/oder gasdicht umschließen.

2. Anordnung nach Anspruch 1, **dadurch gekennzeichnet, dass** der Einsatz (2, 52) ein Hohlzylinder mit offener Grund- und/oder Deckfläche ist.

3. Anordnung nach Anspruch 2, **dadurch gekennzeichnet, dass** die Nut (21, 53) eine Tiefe im Bereich zwischen 5 % und 15 % der Stärke der Außenwandung des Einsatzes aufweist.

4. Wärmetauscher (5), bei dem sowohl der Raum zwischen Einsatz (52) und Gehäuse (51) als auch der Einsatz (52) jeweils von einem flüssigen oder gasförmigen Medium (54, 55) durchströmbar sind, so dass Wärme durch die Wandung des Einsatzes (52) hindurch zwischen den beiden Medien (54, 55) ausgetauscht werden kann, als Anordnung nach Anspruch 1.

5. Anordnung nach einem der Ansprüche 1 bis 4, **dadurch gekennzeichnet, dass** der Einsatz (2, 52) aus einem härteren Material gefertigt ist als das Gehäuse.

6. Anordnung nach Anspruch 5, **dadurch gekennzeichnet, dass** das Gehäuse (1, 51) aus Aluminium und der Einsatz (2, 52) aus Gusseisen, Stahl, einer Kupferlegierung oder hypereutektoidem Aluminium besteht. - 13 -

7. Anordnung nach einem der Ansprüche 1 bis 6, **dadurch gekennzeichnet, dass** die Nut (21, 53) eine Breite aufweist, die im Bereich des Drei- bis Fünffachen ihrer Tiefe liegt.

8. Anordnung nach einem der Ansprüche 1 bis 7, **dadurch gekennzeichnet, dass** die Nut (21, 53) zwischen 0,4 mm und 1 mm, bevorzugt zwischen 0,4 mm und 0,8 mm, tief ist.

9. Anordnung nach einem der Ansprüche 1 bis 8, **dadurch gekennzeichnet, dass** das Gehäuse (1) als Kurbelgehäuse eines Motors oder Kompressors ausgebildet ist und dass der Einsatz (2) als Zylinderbuchse ausgebildet ist.

## Claims

1. Arrangement consisting of a housing (1, 51) with a receptacle or opening (12a, 12b) and a cylindrical insert (2, 52) which is fitted into the said receptacle or opening (12a, 12b) with at least one interference fit, wherein the insert (2, 52) has an all-round groove (21, 53) so that by virtue of material of the insert (2, 52) and/or of the housing (1, 51) displaced into the groove (21, 53) during the assembly process, the insert is both fixed against the housing (1, 51) and sealed in a manner leakproof to liquids and/or gases,
**characterised in that** an outer wall of the insert (2, 52) and an inner wall of the housing (1, 51) enclose a space (32) in a manner leakproof to liquids and/or gases.

2. Arrangement according to Claim 1, **characterised in that** the insert (2, 52) is a hollow cylinder with an open bottom and/or top surface.

3. Arrangement according to Claim 2, **characterised in that** the groove (21, 53) has a depth in the range between 5% and 15% of the thickness of the outer wall of the insert.

4. Heat exchanger (5) in which a liquid or gaseous medium (54, 55) can be passed, respectively, through both the space between the insert (52) and the housing (1, 51) and the insert (52), so that heat can be exchanged between the two media (54, 55) through the wall of the insert (52), as an arrangement according to Claim 1.

5. Arrangement according to any of Claims 1 to 4, **characterised in that** the insert (2, 52) is made of a harder material than the housing.

6. Arrangement according to Claim 5, **characterised in that** the housing (1, 51) is made of aluminium and the insert (2, 52) is made of cast iron, steel, a copper alloy or hypereutectoid aluminium - 13 -

7. Arrangement according to any of Claims 1 to 6, **characterised in that** the width of the groove (21, 53) is in the range three to five times its depth.

8. Arrangement according to any of Claims 1 to 7, **characterised in that** the depth of the groove (21, 53) is between 0.4 mm and 1 mm, preferably between 0.4 mm and 0.8 mm.

9. Arrangement according to any of Claims 1 to 8, **characterised in that** the housing (1) is in the form of a crankcase of an engine or compressor and the insert (2) is a cylinder lining.

## Revendications

1. Agencement constitué d'un boîtier (1, 51), ayant un logement ou une ouverture (12a, 12b), et d'une pièce (2, 52) cylindrique rapportée, qui est montée, avec au moins un ajustement de surdimensionnement, dans le logement ou l'ouverture (12a, 12b), la pièce (2, 52) rapportée ayant une rainure (21, 53) faisant le tour, de manière tant à être fixée qu'également rendue étanche au liquide ou au gaz par rapport au boîtier (1, 51), par du matériau de la pièce (2, 52) rapportée et/ou du bottier (1, 51), qui, au montage, a été refoulée dans la rainure (20, 53), **caractérisé en ce qu'**une paroi extérieure de la pièce (2, 52) rapportée et une paroi intérieure du boîtier (1, 51) entourent un espace (32) d'une manière étanche au liquide et/ou au gaz.

2. Système suivant la revendication 1, **caractérisé en ce que** la pièce (2, 52) rapportée est un cylindre creux ayant une surface de fond et/ou de couvercle ouverte.

3. Système suivant la revendication 2, **caractérisé en ce que** la rainure (21, 51) a une profondeur dans la plage comprise entre 5% et 15% de l'épaisseur de la paroi extérieur de la pièce rapportée.

4. Echangeur de chaleur (5), dans lequel tant l'espace entre la pièce (52) rapportée et le boîtier (51) qu'également la pièce rapportée (52) peuvent être traversés, respectivement, par un fluide (54, 55) liquide ou gazeux, de manière à pouvoir échanger, entre les deux fluides (54, 55), de la chaleur à travers la paroi de la pièce (52) rapportée, sous la forme d'un système suivant la revendication 1.

5. Système suivant l'une des revendications 1 à 4, **caractérisé en ce que** la pièce (2, 52) rapportée est en un matériau plus dur que le boîtier.

6. Système suivant la revendication 5, **caractérisé en ce que** le boîtier (1, 51) est en aluminium et la pièces (2, 52) rapportée est en fonte, en acier, en un alliage de cuivre ou en aluminium type hypereutectique.

7. Système suivant l'une des revendications 1 à 6, **caractérisé en ce que** la rainure (21, 53) a une largeur, qui est dans la plage de trois fois à cinq fois sa profondeur.

8. Système suivant l'une des revendications 1 à 7, **caractérisé en ce que** la rainure (21, 53) a une profondeur comprise entre 0,4 mm et 1 mm, de préférence entre 0,4 mm et 0,8 mm.

9. Système suivant l'une des revendications 1 à 8, **caractérisé en ce que** le boîtier (1) est constitué sous la forme d'un carter d'un moteur ou d'un compresseur et **en ce que** la pièce (2) rapportée est constituée sous la forme d'une douille cylindrique.
